# EUROPEAN PATENT SPECIFICATION

(11) **EP 4 064 836 B1**
(45) Date of publication and mention of the grant of the patent: **31.12.2025**
(21) Application number: 20816406.1
(22) Date of filing: 24.11.2020
(51) Int. Cl.: A01K 73/045, B63B 21/66, B63B 35/16

(54) **A TRAWL DOOR WITH HIGH-LIFT PROVIDING TUBE ELEMENT**
SCHLEPPTÜR MIT HOHEM HUB, DIE EIN ROHRELEMENT BEREITSTELLT
PORTE DE CHALUT DOTÉE D'UN ÉLÉMENT DE TUBE DE PRODUCTION HYPERSUSTENTATEUR

(30) Priority: 25.11.2019 DK PA201970723
(43) Date of publication of application: 05.10.2022
(73) Proprietor: Volu Ventis ApS, 8600 Silkeborg (DK); P/F Vónin, 530 Fuglafjørdur (FO)
(72) Inventor: HJORT, Søren, 8600 Silkeborg (DK)
(74) Representative: Aera A/S
(86) International application number: PCT/DK2020/050327
(87) International publication number: WO 2021/104591

(56) References cited:
- WO-A1-2017/108056
- WO-A1-2018/054443
- US-A- 4 653 213
- US-A1- 2018 325 086

## Description

### Technical Field

The present invention relates to a trawl door with a round-shaped elongated element for generation of very high trawl spreading (lift) force.

### Background art

Trawl doors are hydrodynamic vertically positioned wings that are used in pairs, starboard and a port, for providing the necessary spreading force for the fishing trawl being towed by the trawl doors. When invented many decades ago, trawl doors were wooden flat plates (called otter boards) with similar functionality, but with very limited spreading power.

Since the advent of trawl doors, hydrodynamic improvements have appeared. Hydrodynamic openings (slits) were introduced to better enable the water to deflect around the board and thereby provide lift. Later the flat wooden board was replaced by rolled metal sheets, such that hydrodynamic camber was obtained, yielding improved lift coefficients (spreading force). The simple slits were later replaced by narrowing channels between the curved metal sheets, leading to the trawl door to become a multi-element hydrodynamic wing, conceptually very similar to multi-element aerodynamic wings used on aircrafts during take-off and landing when the wings' flaps are ejected in pursuit of high lift coefficients. The immediate benefit of high lift coefficients on trawl doors are more compact designs, which are less heavy, cheaper, and safer to operate.

In a pursuit of a trawl door with a higher lift coefficients a thick hydrofoil on the pressure side (inner side) of the sequence of curved metal sheets has been tested. Such a thick hydrofoil is described in patent application WO2017108056A1, where it is called a "flow booster", because it redirects the water flow and boost the flow rate through the converging channels between the hydrofoil elements, thereby creating higher flow velocity through the converging channels and an associated lower pressure on the suction side (outer side) of the trawl door, compared to a similar configuration without the thick hydrofoil (flow booster). Another trawl door known in the art are disclosed in US4653213A, which discloses an end door for a trawling net, which has an open framework for clearance of debris and panel structure secured to the framework therebehind for providing the required resistance to keep the mouth of the net open while the trawl is under tow in fishing waters.

However, it is a disadvantage of standard trawl doors, that even higher lift coefficients are not obtainable, and that the operative (available for successful use) angular range is quite narrow. The so-called Angle-of-Attack between the free water and the trawl doors orientation in yaw must be within a range of no more than 20 degrees on standard trawl doors. This makes the trawl door sensitive to cross currents, or trawler manoeuvres that exert asymmetrical forces on the trawl doors, e.g. when turning the vessel 180 degrees during trawling operation.

Hence, it is an object of the present invention to provide a trawl door with a new type of hydrodynamic element, which in itself is not a hydrofoil, but which in conjunction with the trawl door hydrofoils creates a high deflection of the flow passing the trawl door, and hereby obtaining a very good lift coefficient.

### Summary of the invention

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

All directions in regards to the trawl door as disclosed herein, such as upper, lower, horizontal forward/mid and aft end, all relate to the positions in or on the trawl door when the trawl door is in its operational position, such as in the water during trawl operation.

It is known from fluid dynamic theory, (see e.g. Smith, A.M.O., High-Lift Aerodynamics, Journal of Aircraft, 1975, 12(6), pp. 501-530), that a circular tube ideally has the highest potential of all shapes for deflecting a flow, i.e. for creating lift force. The word "ideally" means that it is assumed there is no hydrodynamic/aerodynamic stall. However, in real life stall is unavoidable. Any non-streamlined geometry, such as box-shaped, circular, or otherwise blunt bodies will create flow separation and subsequent stall when the flow fails to run smoothly over the geometry's entire surface.

Furthermore, a circular tube has an omni-directional cross-section, so lift-forces will appear symmetrically around the tube thereby cancelling each other.

The invention consists in using a circular tube as an ideal lift-creating hydrodynamic element, by combining it with a series of regular hydrofoils, such that the flow passing the tube, which would otherwise separate and create stall, is guided inside a flow channel between one side of the circular tube and one or several of the regular hydrofoils, such that stall is completely suppressed or at least substantially delayed. Elimination of stall on one side of the circular tube will create a high deflection of the flow around the tube, in fluid dynamic theory known as "circulation", thereby creating lift.

The circular tube will not only create lift acting on the circular tube itself, but the circulation will also increase the lift forces created by the regular hydrofoils, such that the lift coefficient of the entire trawl door is increased.

The technical term "lift coefficient" is a dimensionless coefficient that relates the lift generated by a lifting body to the fluid density around the body, the fluid velocity and an associated reference area. A lifting body is a foil or a complete foil-bearing body such as a fixed-wing aircraft or a trawl door.

Hence, disclosed herein in a first aspect is a trawl door according to claim 1 comprising a plurality of hydrofoils, and at least one round-shaped elongated element; wherein the plurality of hydrofoils extends in parallel in a longitudinal direction of the hydrofoils and being arranged in an overlapping sequence so that one or more flow channels are formed between neighbouring hydrofoils, and the at least one round-shaped elongated element extends in a longitudinal direction parallel to the longitudinal direction of the hydrofoils; wherein the trawl door has a chord length defined as the chord length measured from a leading edge of a first hydrofoil of the overlapping sequence of the plurality of hydrofoils to a trailing edge of a last hydrofoil of the overlapping sequence of the plurality of hydrofoils; wherein the at least one round-shaped elongated element is positioned at a pressure side of the plurality of hydrofoils and at a rear part of the overlapping sequence of the plurality of hydrofoils in such a way that the at least one round-shaped elongated element forms a structurally connected integrated part to the plurality of hydrofoils such that at least one flow channel is formed between the at least one round-shaped elongated element and the last hydrofoil of the overlapping sequence of the plurality of hydrofoils; wherein the at least one round-shaped elongated element has an elliptically shaped cross-section having a minor axis and a major axis; and wherein the major axis is between 5% and 75% of the chord length, and wherein the ratio between the minor axis and the major axis is between 0.5 and 1.0.

A round-shaped elongated element as disclosed herein is an element, which in its cross-section is circular or elliptically shaped. This does not mean that the element needs to be perfectly elliptical, but can have minor variation in its cross-sectional shape. However, the element as disclosed herein is not a hydrofoil or has a hydro-profile shape with a defined leading edge and trailing edge. Compared to standard multi-element trawl doors, the use of a round-shaped elongated element can improve the lift coefficient by approximately 50%.

Compared to multi-element trawl doors with a thick hydrofoil placed on the aft pressure side, such as e.g. the "flow booster" of WO2017108056A1, the use of a round-shaped elongated element instead of a thick hydrofoil can improve the lift coefficient by 20-30%.

An additional benefit is that the absence of hydrofoil characteristics such as a leading edge and a trailing edge on the tube element causes the tube element to be quite insensitive to incidence angle between the flow passing the trawl door and the trawl, which is also known as the Angle-of-Attack (AoA). A trawl door with a tube element will therefore be able to operate well and create a high lift force over a large AoA range of up to 35 degrees. For standard known trawl doors, the operative AoA range is approximately 20 degrees. A higher operative AoA range is a benefit in general, and specifically when the trawl doors experience different AoAs, e.g. when fishing in crosscurrent conditions and/or when the trawler makes a 180 degree turn.

The flow channel formed between the round-shaped elongated element and the last hydrofoil of the overlapping sequence of hydrofoils is arranged to guide a flow of water and is arranged to suppress hydrodynamic stall, which would otherwise be generated around the round-shaped elongated element, if the overlapping sequence of hydrofoils were not there.

Disclosed herein in a second aspect is the use of a set of trawl doors comprising one starboard trawl door and one port trawl door, for trawling operations, according to claim 7, wherein each of the trawl doors is a trawl door according to the first aspect.

Disclosed herein in a third aspect is the use of a set of trawl doors comprising one starboard trawl door and one port trawl door, for towing a fishing trawl net, wherein a fishing vessel is towing the set of trawl doors, according to claim 8, and wherein each of the trawl doors is a trawl door according to the first aspect.

Disclosed herein in a fourth aspect is the use of a set of trawl doors comprising one starboard trawl door and one port trawl door, for towing seismic equipment for seabed measurements for measuring the seabed composition, according to claim 9, and wherein each of the trawl doors is a trawl door according to the first aspect.

### Brief description of the drawings

In the following, exemplary embodiments of the invention are described in more detail with reference to the figures, of which
- Fig. 1: is a trawling vessel with trawl doors and trawl as seen in perspective.
- Fig. 2: is a cross-sectional view of a trawl door with a high-lift providing round-shaped elongated element.
- Fig. 3: is another example of a cross-sectional view of a trawl door with a high-lift round-shaped elongated element.
- Fig. 4: is an example of a cross-sectional view of a trawl door with a high-lift providing round-shaped elongated element with flow streamline visualization.
- Fig. 5: is a perspective view of a trawl door with a high-lift providing round-shaped elongated element.
- Fig. 6: is another perspective view of a trawl door with a high-lift providing round-shaped elongated element.
- Fig. 7: is a cross-sectional view of a trawl door with energy-efficient shutters where the pivoting axis is inside a round-shaped elongated element and the shutters are shown in a) disengaged position, b) mid-position, and c) engaged position.
- Fig. 8: is a cross-sectional view of a trawl door with energy-efficient shutters where the pivoting axis and a spindle arrangement used for actuation are inside a round-shaped elongated element, and the shutters are shown in a) disengaged position, b) mid-position, and c) engaged position.
- Fig. 9: is a perspective view of the trawl door from figure 8, as seen from two sides a) and b).

### Detailed description of the invention

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

The width of the flow channel formed between the elongated element and the last hydrofoil may be defined in terms of the width of the other flow channels formed between neighbouring hydrofoils. Hence, in one or more the width of the at least one flow channel formed between the at least one round-shaped elongated element and the last hydrofoil of the overlapping sequence of the plurality of hydrofoils is between 50% and 200% of the width of the one or more flow channels formed between neighbouring hydrofoils.

By the width of the one or more flow channels formed between neighbouring hydrofoils is meant that if there is multiple channels between neighbouring hydrofoils, and if the width of these flow channels are not substantially the same, and average of the width of these flow channels is taken and used as "the width of the one or more flow channels formed between neighbouring hydrofoils".

If it is assumed that the cross-section of the elongated element is perfectly elliptical, that means that the minor variation in its cross-sectional shape can be disregarded, the elongated element can further be described via the eccentricity. The eccentricity of an ellipse has a well-known mathematical meaning/definition, which a person skilled in the art is fully aware of, and knows how to calculate. If the cross-sectional shape is not perfectly elliptical, the eccentricity (e) may be defined as e = (1-b^2/a^2)^(1/2), where a is the length of the major axis and b is the length of the minor axis.

In one or more embodiments, the at least one round-shaped elongated element has an eccentricity at or below 0.88, such as at or below 0.85, such as at or below 0.80, such as at or below 0.70, such as at or below 0.65.

In one or more embodiments, the at least one round-shaped elongated element has an eccentricity at or above 0.05, such as at or above 0.10.

In one or more embodiments, the at least one round-shaped elongated element has an eccentricity between 0 and 0.88, such as between 0 and 0.85, such as between 0 and 0.80, such as between 0 and 0.70, such as between 0 and 0.65.

In one or more embodiments, the at least one round-shaped elongated element has an eccentricity between 0.05 and 0.88 such as between 0.05 and 0.65.

In one or more embodiments, the at least one round-shaped elongated element has an eccentricity between 0.1 and 0.88, such as between 0.1 and 0.65.

The size of the elongated element is further defined by the length of the major axis of the elongated element compare to the chord length of the trawl door. The chord length of the trawl door is defined as the chord length measured from the leading edge of the first hydrofoil to the trailing edge of the last hydrofoil. In one or more embodiments, the major axis is between 5% and 70% of the chord length, such as between 5% and 70%, such as between 5% and 65%, such as between 5% and 60%, such as between 5% and 55%, such as between 5% and 50%, such as between 5% and 45%, such as between 5% and 40%, of the chord length.

In one or more embodiments, the major axis is between 10% and 75% of the chord length, such as between 15% and 75%, such as between 20% and 75%, such as between 25% and 75%, such as between 30% and 75%, such as between 35% and 75%, such as between 40% and 75% of the chord length.

In one or more embodiments, the major axis is between 10% and 70% of the chord length, such as between 15% and 70%, such as between 15% and 65%, such as between 20% and 65%, such as between 25% and 65% of the chord length.

The cross-sectional shape of the elongated element is further defined by the ratio between the minor and major axes of the elongated element. In one or more embodiments, the ratio between the minor axis and the major axis is between 0.55 and 1.00, such as between 0.60 and 1.00, such as between 0.65 and 1.00, such as between 0.70 and 1.00.

In one or more embodiments, the ratio between the minor axis and the major axis is between 0.50 and 0.95, such as between 0.50 and 0.90, such as between 0.50 and 0.85, such as between 0.50 and 0.50, such as between 0.50 and 0.75.

In one or more embodiments, the ratio between the minor axis and the major axis is between 0.50 and 0.95, such as between 0.55 and 0.95, such as between 0.60 and 0.95, such as between 0.65 and 0.95, such as between 0.70 and 0.95.

In one or more embodiments, the ratio between the minor axis and the major axis is between 0.50 and 0.90, such as between 0.55 and 0.90, such as between 0.60 and 0.90, such as between 0.65 and 0.90, such as between 0.70 and 0.90, such as between 0.75 and 0.90, such as between 0.80 and 0.90, such as between 0.85 and 0.90.

In one or more embodiments, the trawl door further comprises one or more front wire attachment holes. Front wire attachment holes are used to connect one or several wires from the fishing vessel to the trawl door, so the trawl door may be used during trawling operations.

In one or more embodiments, the one or more front wire attachment holes are positioned in the horizontal forward/mid of the trawl door.

In one or more embodiments, the trawl door further comprises one or more rear bridle attachment holes. Rear bridle attachment holes may be used to connect one or several wires from the fishing net/trawling net to the trawl door, so the trawl door may be used during trawling operations for dragging a fishing net/trawling net. The trawl door may also be used for towing seismic equipment for seabed measurements used for measuring the seabed composition.

In one or more embodiments, the one or more rear bridle attachment holes are positioned in the aft end of the trawl door.

In one or more embodiments, the trawl door further comprises section endplates and stiffeners.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils. The plurality of hydrofoils, as disclosed herein, may be multiple hydrofoils, such as 3, 4, 5, 6 hydrofoils. The sequence of hydrofoils will be defined by a leading edge, the foremost edge when dragging/trawling the trawl door through water during trawling operation, and a trailing edge, the rearmost edge when dragging/trawling the trawl door through water during trawling operation.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils and one or more middle hydrofoils positioned between the first hydrofoil and the last hydrofoil.

In one or more embodiments, the one or more middle hydrofoils comprises at least two hydrofoils. In one or more embodiments, the plurality of hydrofoils comprises at least three hydrofoils. In one or more embodiments, the plurality of hydrofoils comprises at least four hydrofoils.

In one or more embodiments, the at least one round-shaped elongated element comprises an interior cavity.

An interior cavity as disclosed herein is to be understood as a cavity, which is in fluid connection with water during trawling operation, i.e. the cavity is to be flooded with water whenever the trawl door is submerged in water, e.g. during normal trawling operation. This means, that the cavity is not an interior closed cavity, but at least comprises one opening in which it can be in fluid connected with water.

In one or more embodiments, the interior cavity is in fluid connection with water surrounding the at least one round-shaped elongated element during operation of the trawl door.

In one or more embodiments, the interior cavity extends through the at least one round-shaped elongated element in the longitudinal direction of at least one round-shaped elongated element. The interior cavity of the at least one round-shaped elongated element may comprise electro-mechanical devices, such as sensor equipment, battery power, or hydraulic systems. The cavity may also comprise other components, such as buoyancy or gravity elements.

In one or more embodiments, a first part of the interior cavity comprises one or more buoyancy elements. In one or more embodiments, a second part of the interior cavity comprises one or more gravity elements.

A buoyancy element is an element, with a mass density lower than the mass density of water, such as seawater. The buoyancy element may e.g. be made of syntactic foam encapsulated in a polyethylene external skin. The buoyancy element can be optimized to reach the required buoyancy at operating water depth.

A gravity element is an element, with a mass density higher than the mass density of water, such as seawater. The gravity element may e.g. be made of iron or another density heavy material. The gravity element can be optimized to reach the required volume gravity mass at operating water depth

In one or more embodiments, the at least one round-shaped elongated element further comprises a fixed add-on flap. A fixed add-on flap may be attached to the element to create extra fluid circulation. This may result in a slightly better lift coefficient, or help in preventing stall.

The trawl door may be divided into two or several sections. In one or more embodiments, the trawl door is divided into a first half and a second half, wherein the first half comprises a first half of the plurality of hydrofoils and a first half of the at least one round-shaped elongated element, and wherein the second half comprises a second half of the plurality of hydrofoils and a second half of the at least one round-shaped elongated element. The trawl door may also be divided into three parts, four parts, five parts, etc.

If the trawl door is divided into two halves, the cavity in one-half of the element may contain buoyancy elements. In one or more embodiments, the interior cavity of the first half of the at least one round-shaped elongated element comprises one or more buoyancy elements. The cavity in the other half of the element may contain gravity elements. In one or more embodiments, the interior cavity of the second half of the at least one round-shaped elongated element comprises one or more gravity elements.

The shape of the trawl door in the span wise direction may vary. In one or more embodiments, the trawl door is linear along the span wise direction. In another embodiment, the trawl door is curved, bent, or angled, along the span wise direction. In yet another embodiment, the trawl door comprises two halves, wherein the two halves are linear along the span wise direction of each half, and wherein the two halves are connected to form a non-linear angle of the trawl door along the span wise direction of the trawl door.

By "span wise" is meant the dimension along the length of the trawl door perpendicular to the passing water when in use. When the trawl door is vertically erected, the span wise direction is the vertical direction.

In practice, a trawl door will probably never be curved in the span wise direction, as it will require double-curved surfaces and thus impossible to make in a simple manufacture using rolled steel sheets. Many trawl doors used today have one or more bends of 5, 10, 12, or 16 degrees. This may make the span wise direction of the trawl door appear curved, but in reality, it is constructed of multiple linear pieces connected with bends between each piece.

In one or more embodiments, the trawl door comprises plurality of linear pieces connected with bends of between 2 and 20 degrees between each piece in the span wise direction.

The elongated element may comprise additional holes being in fluid connection with the surrounding water during trawling operations. Hence, in one or more embodiments, the at least one round-shaped elongated element comprises an interior cavity and wherein one or more holes extends perpendicular to the longitudinal direction of the at least one round-shaped elongated element and extends from the interior cavity through the at least one round-shaped elongated element. In one or more embodiments, the one or more holes are elliptically shaped.

By having these holes extending from the cavity of the elongated element and through the element easy and quick flooding of the cavity is obtained when the trawl door is submerged in water. Furthermore, these holes enable easy access to, and maintenance of, any electro-mechanical equipment being located inside the round elongated element cavity.

The trawl door may further comprise shutters, which may be arranged to open and close for the flow of water through the flow channels formed between the hydrofoils or formed between the last hydrofoil and the elongated element. In one or more embodiments, the trawl door further comprises one or more shutters extending in the longitudinal direction of the plurality of hydrofoils and arranged at the pressure side of the plurality of hydrofoils.

In one or more embodiments, the trawl door further comprises drive means for rotating the one or more shutters about a pivoting axis extending in the longitudinal direction of the plurality of hydrofoils. In one or more embodiments, the drive means are arranged to rotate at least one of the shutters between a disengaged position and an engaged position, in which the engaged position of the at least one shutter substantially reduces or prevents a fluid flow through one or more of said flow channels during operation of the trawl door.

Each shutter can be controlled by the drive means and rotate around the pivoting axis. The energy amount required to make the shutters pivot around their pivoting axis is kept minimal by orientating said controllable shutters such that they, upon pivoting, move substantially parallel to their own main surfaces such that water pressure forces are directed substantially perpendicular to the moving direction of the shutters.

As disclosed herein, the term "substantially parallel" is used to describe a flat or curved plate motion, which is in-planar within a +/- 15 degree tolerance.

As disclosed herein, the term "substantially perpendicular" is used to describe pressure force directions that are oriented 90 degrees off the flat or curved plate motion within a +/- 15 degree tolerance.

In one or more embodiments, the one or more shutters are split into a first set of one or more shutters and a second set of one or more shutters. In one or more embodiments, a first drive means is arranged to control the position of the first set of the one or more shutters and a second drive means is arranged to control the position of the second set of the one or more shutters.

In one or more embodiments, the drive means are one or more actuators arranged to rotate at least one of the shutters between the disengaged position and the engaged position.

The first and the second drive means arranged to control the position of the one or more shutters may be actuators, which means that when the actuator is extended, the shutters are rotated around the pivoting axis in one direction, and when the actuators are retracted, the shutters are rotated around the pivoting axis in the opposite direction.

In one or more embodiments, the trawl door is made of a first half and a second half, wherein the first half comprises a first set of one or more shutters and the second half comprises a second set of one or more shutters, and wherein the first drive means is placed to control the position of the first set of one or more shutters and the second drive means is placed to control the position of the second set of one or more shutters.

By having at least two sets of one or more shutters, arranging them in two halves of the trawl door, and by being able to engage/disengage only one, or both of them, individually (via the drive means), the trawl door is able to not only be controlled in one direction, but in two directions, i.e. side-to-side and up-and-down.

The drive means is arranged to operate the shutters from a disengaged positon to an engaged position and vice versa. In one or more embodiments, the at least one shutter substantially reduces or prevents a fluid flow through one or more of the flow channels during operation of the trawl door by at least 50%. A 50% reduction may also be seen as a reduction of the flow by a factor of two, i.e. halving the flow through the flow channel in the engaged state compared to the disengaged position.

In one or more embodiments, the at least one shutter substantially reduces or prevents a fluid flow through one or more of the flow channels during operation of the trawl door by at least 75%. A 75% reduction may also be seen as a reduction of the flow by a factor of four, i.e. only a quarter of the flow is let through the flow channel in the engaged state compared to the disengaged position.

In one or more embodiments, the at least one shutter substantially reduces or prevents a fluid flow through one or more of the flow channels during operation of the trawl door by at least 90%. A 90% reduction may also be seen as a reduction of the flow by a factor of ten, i.e. only a one tenth of the flow is let through the flow channel in the engaged state compared to the disengaged position.

In one or more embodiments, the at least one shutter substantially reduces or prevents a fluid flow through one or more of the flow channels during operation of the trawl door by at least 99%. A 99% reduction may also be seen as a reduction of the flow by a factor of one hundred, i.e. only a one hundredth of the flow is let through the flow channel in the engaged state compared to the disengaged position.

The shutter may also almost completely block the flow through the flow channel, hence, in one or more embodiments, the at least one shutter substantially blocks a fluid flow through one or more of the flow channels during operation of the trawl door.

The pivoting axis for rotating the one or more shutters about, which extends in the longitudinal direction of the plurality of hydrofoils, may be located inside the elongated element. Hence, in one or more embodiments, the pivoting axis is located inside the at least one round-shaped elongated element.

In one or more embodiments, the pivoting axis is arranged to allow rotational movement of the at least one shutter of up to 300 degrees.

In one or more embodiments, the shutter is not allowed full revolutions around the pivoting axis.

In one or more embodiments, the shutter is configured to prevent full revolutions around the pivoting axis.

In one or more embodiments, the pivoting axis is arranged to allow rotational movement of the at least one shutter of up to 300 degrees, such as up to 290 degrees, such as up to 280 degrees, such as up to 270 degrees, such as up to 260 degrees, such as up to 250 degrees, but without allowing a full revolutions around the pivoting axis.

The pivoting around the axis may be limited, such that entire revolutions of the shutters around the pivoting axis is not possible. By an entire revolution of the shutters around the pivoting axis is meant that the shutters are rotated 360 degrees around the axis without being blocked or forced into other parts of the trawl door.

The trawl door may further comprise one or more fixation devices, which may be used to structurally connect the shutters to the pivoting axes. Hence, in one or more embodiments, the trawl door further comprises one or more fixation devices, wherein the one or more fixation devices are arranged to structurally connect the at least one shutter to the pivoting axis.

In one or more embodiments, the trawl door comprises at least two fixation devices, such as at least three, such as at least four, such as at least five, or such as at least six fixation devices.

Further technical equipment may be positioned inside the elongated element. In one or more embodiments, technical equipment for control of the trawl door is positioned inside the at least one round-shaped elongated element.

The hydrofoils and/or the elongated element may be made of the same or different material. In one or more embodiments, one or more of the plurality of hydrofoils and/or the at least one round-shaped elongated element are made from metal or a lightweight material such as plastic or rubber, wood, or fibreboard material.

In one or more embodiments, one or more of the plurality of hydrofoils are made from metal or a lightweight material such as plastic or rubber, wood, or fibreboard material.

In one or more embodiments, the at least one round-shaped elongated element is made from metal or a lightweight material such as plastic or rubber, wood, or fibreboard material.

The shape/arrangement of the trawl door may further be defined. In one or more embodiments, the plurality of hydrofoils are one-sided.

By one-sided is meant that the hydrofoil is made by just one flat or curved plate, such that the pressure side and suction side are offset only by the plate thickness.

In one or more embodiments, the plurality of one-sided hydrofoils are made by rolled metal sheets. In one or more embodiments, the plurality of hydrofoils are double-sided.

In one or more embodiments, the plurality of hydrofoils are hybrids between single-sided and double-sided.

The trawl door as disclosed herein may be used for multiple variations of trawl operation. Hence, in one or more embodiments, the trawl door is of pelagic type, semi-pelagic type, bottom-door type, or combinations hereof.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage.

### Detailed description of the drawings

Various examples are described hereinafter with reference to the figures. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

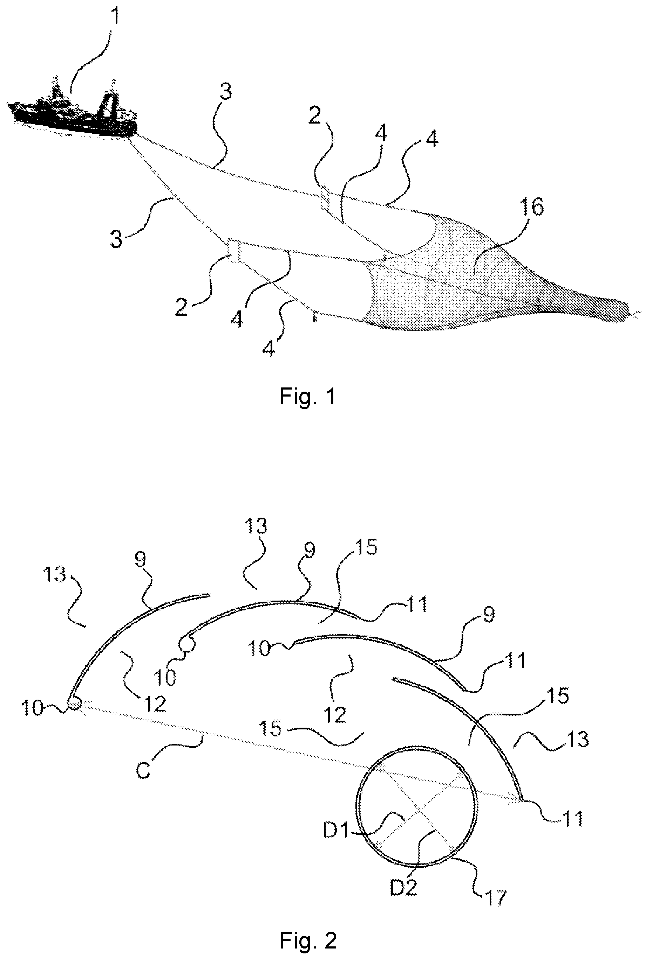

Fig. 1 is a perspective view of a conventional trawling operation comprising a (towing) fishing vessel 1 towing a set of a starboard and a port trawl doors 2, which provide spreading force for the fishing trawl net 16 being towed by said set of trawl doors 2. The figure shows, how the trawl doors 2 are connected and trawled by the fishing vessel 1 via a wire 3 connected to each trawl door 2.

These wires 3 may be attached as seen in the figure in the mid-section of the trawl door 2 e.g. via one or more attachment holes. The fishing trawl net 16 is connected to each trawl door 2 via two bridles 4. These may be, as shown here, be connected to the trawl door 2 in the aft top and bottom of the trawl door 2.

Fig. 2 is a cross-sectional view of a trawl door comprising several hydrofoils 9, each with a leading edge 10 and a trailing edge 11. The leading edge of the foremost hydrofoil 9 is the leading edge 10 of the trawl door, and the trailing edge 11 of the rearmost hydrofoil is the trailing edge 11 if the trawl door. The plurality of hydrofoils 9 are arranged so that flow channels 15 are formed between neighbouring hydrofoils 9.

In conjunction with the several hydrofoils is a round-shaped elongated element 17 positioned such that it forms a flow channel 15 with one or several of the hydrofoils 9, and at least form it with the last hydrofoil 9. Said flow channel 15 will suppress the flow separation and stall that would otherwise occur when the water flows past the round-shaped elongated element 17, i.e. in the absence of the one or several of the hydrofoils 9. The so-called "circulation" created by the round-shaped elongated element 17 will contribute to the overall deflection of the water passing the trawl door, thereby increasing the lift coefficient and enabling the trawl door to provide more spreading force to the towed trawl.

Also shown on fig. 2 are the trawl door's imaginary chord line C defined between the leading edge 10 of the first hydrofoil 9 of the overlapping sequence of the plurality of hydrofoils 9 to the trailing edge 11 of the last hydrofoil 9 of the overlapping sequence of the plurality of hydrofoils 9. Further shown are also the minor D1 and major D2 axes lengths of the round-shaped elongated element 17. When the round-shaped elongated element is perfectly circular, then the minor axis D1 and major axis D2 will have the same length, namely the circle diameter.

The hydrofoils 9, and the trawl door, is arranged so the pressure side 12 of the hydrofoil 9 is on the concave (inner) side of the cambered hydrofoils 9, and the suction side 13 is on the convex (outer) side of said hydrofoils 9. The round-shaped elongated element 17 is positioned on the pressure side 12 of the hydrofoils 9.

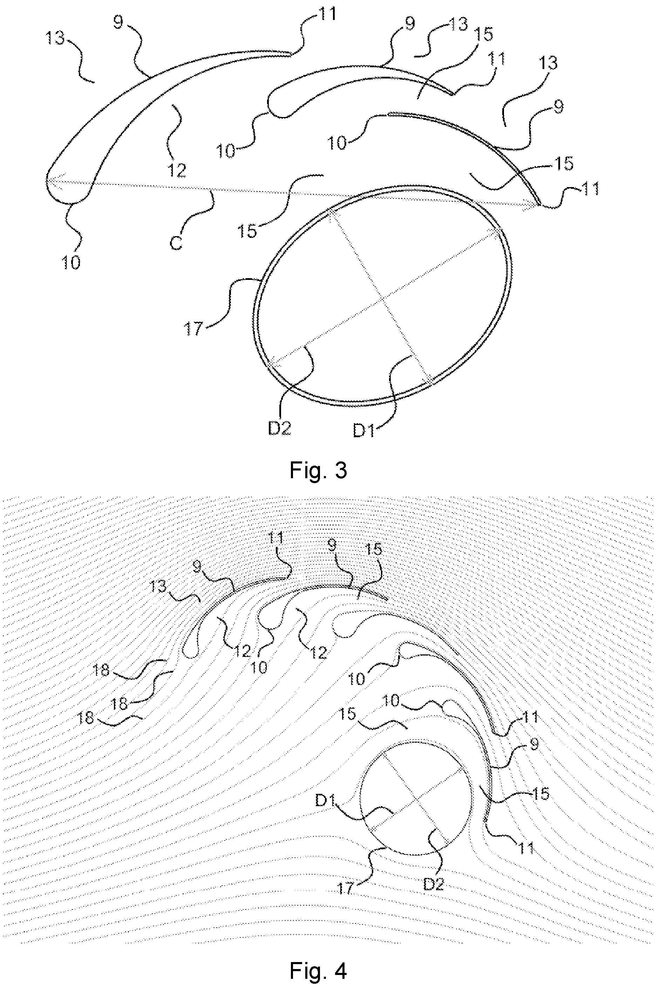

Fig. 3 is another cross-sectional view of a trawl door comprising several hydrofoils 9, each with a leading edge 10 and a trailing edge 11, and a round-shaped elongated element 17 positioned on the pressure side 12 of the several hydrofoils 9. A notable feature is the mix of curved-sheet "single-sided" hydrofoils 9 and regular "double-sided" hydrofoils 9. Both the single-sided and the double-sided hydrofoils 9 contain the usual hydrofoil characteristics: A leading edge 10 and a trailing edge 11. The round-shaped elongated element 17 is not a hydrofoil, and thus characterized by the lack of hydrofoil characteristics such as leading edge, trailing edge, slenderness, and camber. The depicted round-shaped elongated element 17 is in the embodiment of figure 3 not perfectly circular but rather elliptic. The elliptical shape may be described by the ratio between the minor axis D1 and the major axis D2 of the round-shaped elongated element 17. Alternatively, it may be described by the eccentricity as disclosed herein. Even though the embodiments as shown in the figures show a round-shaped elongated element 17 with a perfect round shape, it is envisioned that the round-shaped elongated element 17 may have small curvature, bumps, or creases, which will yield a non-perfect round shape.

Fig. 4 is a cross-sectional view of a trawl door comprising hydrofoils 9, leading edges 10, trailing edges 11, and a round-shaped elongated element 17. One notable feature of the embodiment, as shown in figure 4, is the exemplified hydrofoil shape being a hybrid between the before mentioned "single-sided" and "double-sided" types. Another notable feature is the flow visualization streamlines 18, which exactly shows the paths of the water in passing the trawl door when towed. The undisturbed direction of the water relative to towed trawl door is horizontally from left towards right. From a fluid dynamics viewpoint, it should be appreciated how the flow channel 15 between the round-shaped elongated element 17 and the nearest hydrofoil(s) 9 guides the flow around said round-shaped elongated element 17, thereby creating fluid dynamic circulation and lift.

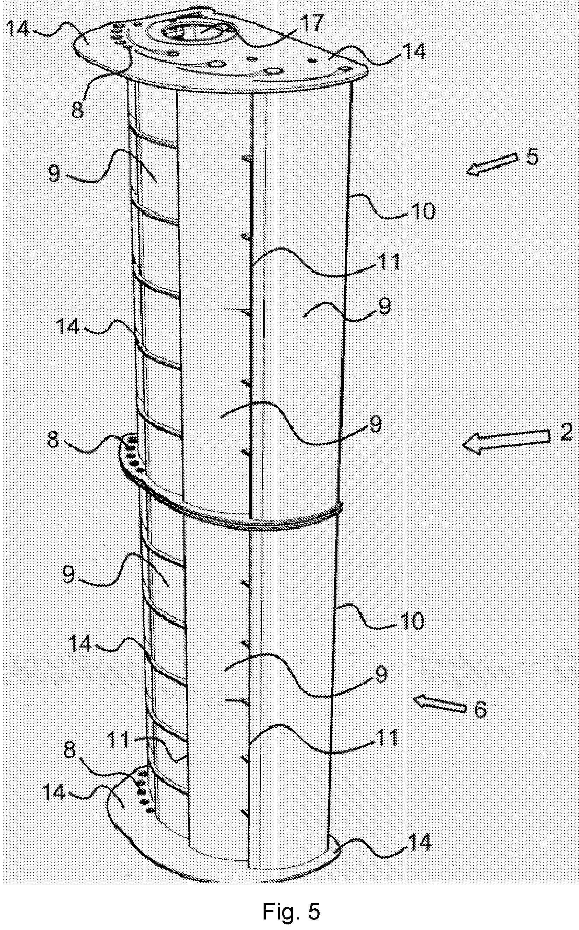

Fig. 5 is a perspective view of the trawl door 2 first half 5 and the trawl door 2 second half 6, both comprising hydrofoils 9, leading edges 10, trailing edges 11, section endplates and stiffeners 14, rear bridle attachment holes 8, and a round-shaped elongated element 17, seen from the suction (convex) side of the hydrofoils 9 (trawl door 2). The bridles (not shown) towing the trawl may be attached to one of the upper and one of the lower rear bridle attachment holes 8, or one bridle will be attached to one of mid rear bridle attachment holes 8. Different types of bridle rigging are possible depending on the type of fishing trawl net to be used and what kind of fish to catch.

Fig. 5 further shows how the round-shaped elongated element 17 has an interior cavity with openings towards the surrounding environment. The embodiment shows one opening in the first half 5 or the trawl door 2. The opening can be seen extending through the section endplates 14.

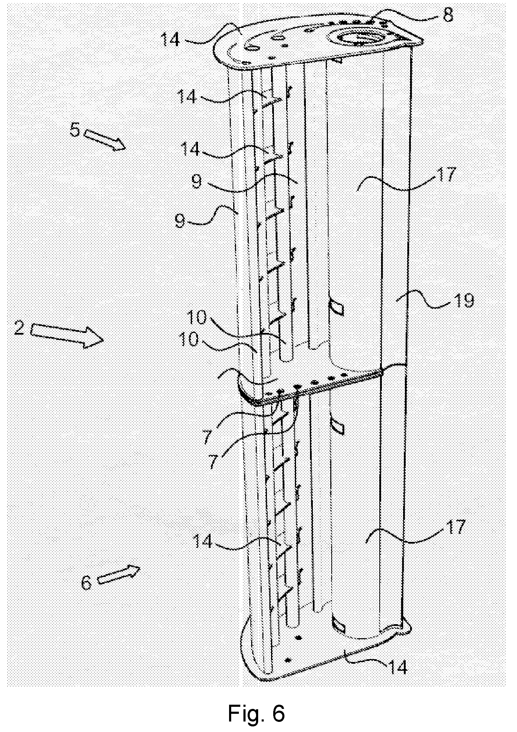

Fig. 6 is a perspective view of an embodiment of the first half 5 and second half 6 of the trawl door 2 similar to the one disclosed in fig. 5. Here the trawl door 2 comprises hydrofoils 9 with leading edges 10 and trailing edges (not shown), section endplates and stiffeners 14, rear bridle attachment holes 8, and a round-shaped elongated element 17 with and inner cavity extending through the section endplate 14 to be in fluid connection with the surrounding environment. The trawl door 2 is seen from the pressure (concave) side. The main wire (not shown) connecting the trawl door to the towing vessel may be attached to one of the front wire attachment holes 7.

Alternative front wire attachment hole 7 designs may be used, such as the possibility of having front wire attachment holes 7 in different vertical heights slightly offset from the shown span wise mid-position. The embodiment of figure 6 further shows a fixed add-on flap 19 attached to the round-shaped elongated element 17.

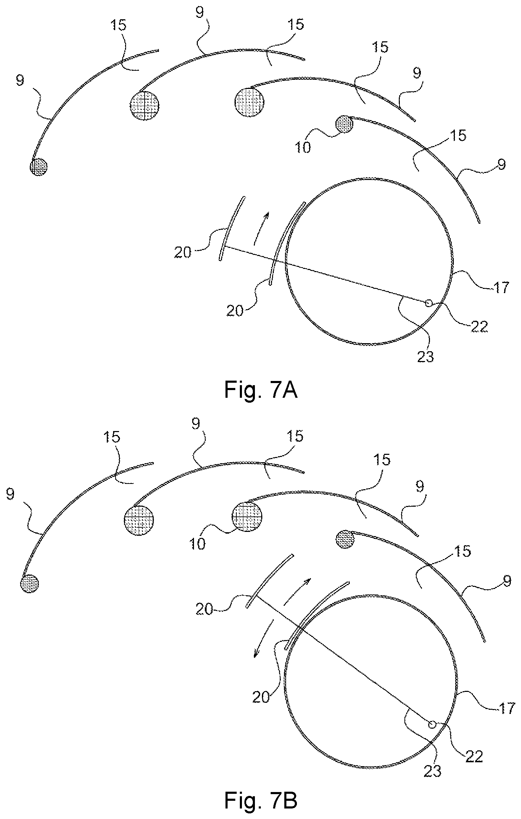

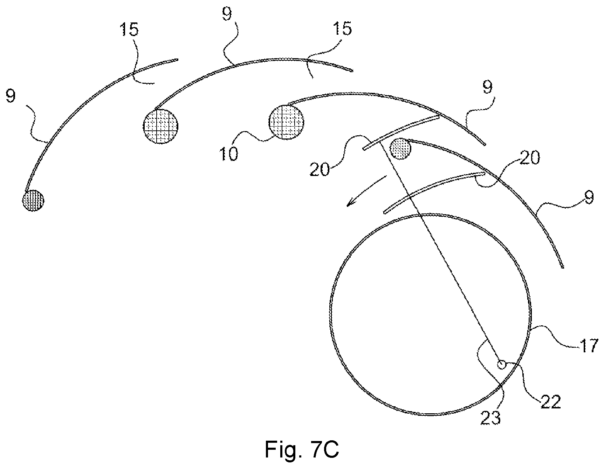

Fig. 7 is a cross-sectional view of a trawl door with energy-efficient shutters where the pivoting axis 22 is inside a round-shaped elongated element 17 and the shutters 20 are shown in a) disengaged position, b) mid-position, and c) engaged position. The trawl door comprises several hydrofoils 9, each with a leading edge and a trailing edge, and a round-shaped elongated element 17 positioned on the pressure side of the several hydrofoils 9. A notable feature is the mix of a round shaped leading edge of the hydrofoils 9 and a curved-sheet "single-sided" trailing edge of the hydrofoils 9. The mixed hydrofoils 9 still contain the usual hydrofoil characteristics: A leading edge, a trailing edge, slenderness, and camber. The depicted round-shaped elongated element 17 comprises the pivoting axis 22 on which the shutters 20 pivot around when moving from the engaged position c) to the mid-position b) and further to the disengaged position a) (c) → b) → a)), or vice versa (a) → b) → c)). The shutters 20 are shown connected to the pivoting axis 22 by fixations devices 23. The embodiment shows how the shutters 20 closes two of the flow channels, the flow channel between the last hydrofoil 9 and its neighbouring hydrofoil 9 and the flow channel between the last hydrofoil 9 and the round-shaped elongated element 17. The flow channels are here closed so the substantially blocks all fluid flow through the two flow channels, however a small amount of flow may continue to flow "below" the shutter 20 and up through the flow channels.

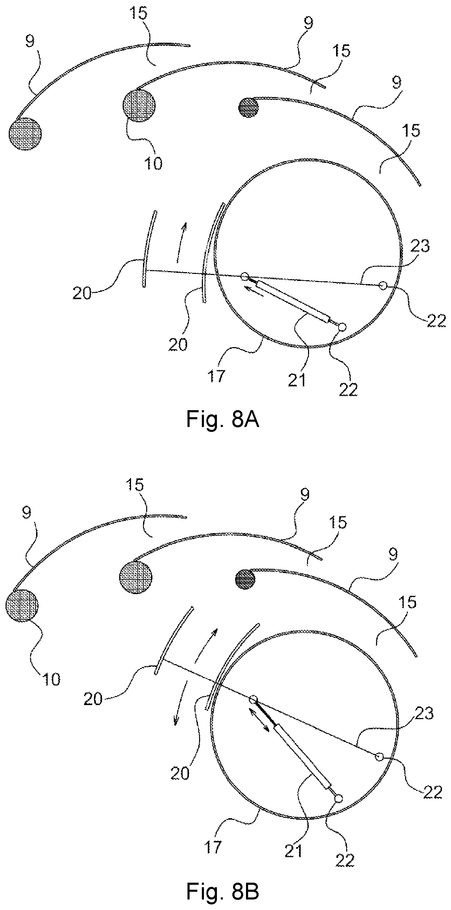

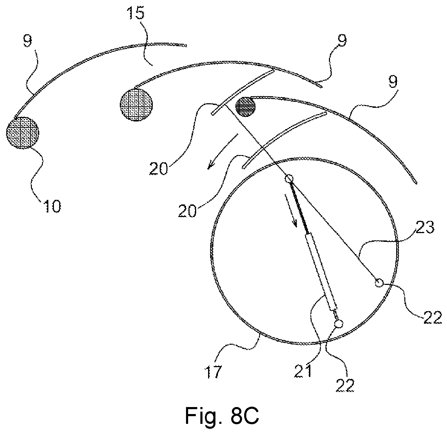

Fig. 8 is a cross-sectional view of a trawl door with energy-efficient shutters 20 where the pivoting axis 22 and drive means 21, are inside a round-shaped elongated element 17, and the shutters 20 are shown in a) disengaged position, b) mid-position, and c) engaged position. The drive means 21 here comprise of a spindle arrangement used for actuation, which will then pivot the shutters 20 around the pivoting axis 22. The shutters 20 and drive means 21 are shown connected to the pivoting axis 22 by fixations devices 23.

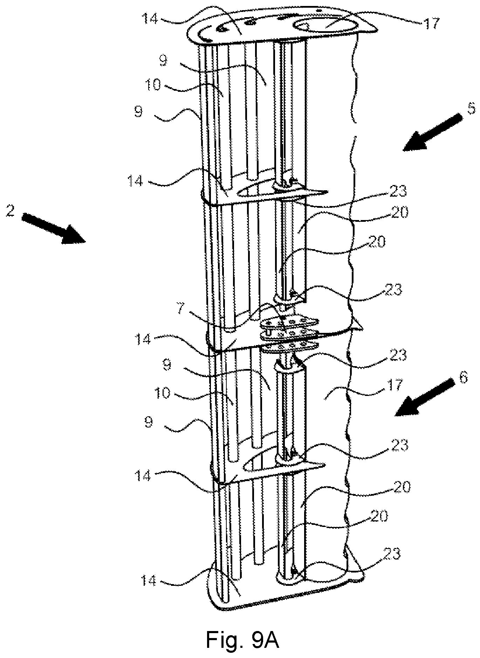

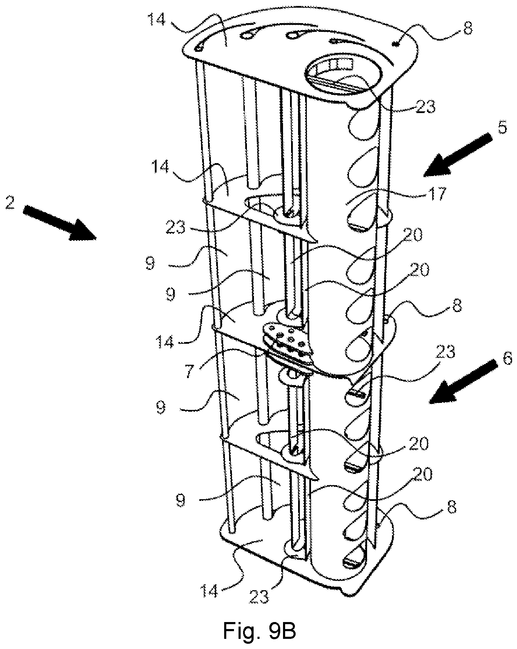

Fig. 9 is a perspective view of the trawl door 2 from figure 8, as seen from two sides a) and b). The trawl door 2 first half 5 and the trawl door 2 second half 6, both comprising hydrofoils 9, leading edges 10, trailing edges, section endplates and stiffeners 14, rear bridle attachment holes 8, and a round-shaped elongated element 17. The trawl door 2 is seen from the pressure (concave) side. The bridles (not shown) towing the trawl may be attached to one of the upper and one of the lower rear bridle attachment holes 8, or one bridle will be attached to one of mid rear bridle attachment holes 8. Different types of bridle rigging are possible depending on the type of fishing trawl net to be used and what kind of fish to catch. The main wire (not shown) connecting the trawl door to the towing vessel may be attached to one of the front wire attachment holes 7. Alternative front wire attachment hole 7 designs may be used, such as the possibility of having front wire attachment holes 7 in different vertical heights slightly offset from the shown span wise mid-position.

Further shows how the round-shaped elongated element 17 has an interior cavity with openings towards the surrounding environment. The embodiment shows one opening in the first half 5 or the trawl door 2. The opening can be seen extending through the section endplates 14. Further are the elliptically shaped openings (best seen in b)) extending perpendicular to the longitudinal direction of the round-shaped elongated element 17. These holes extends from the interior cavity of the round-shaped elongated element 17 through the round-shaped elongated element 17, hereby making the interior cavity being in fluid connection with the surrounding environment.

### References

- 1.: Fishing vessel
- 2.: Trawl door
- 3.: Wire
- 4.: Bridle
- 5.: Trawl door first half
- 6.: Trawl door second half
- 7.: Front wire attachment holes
- 8.: Rear bridle attachment holes
- 9.: Hydrofoil
- 10.: Hydrofoil leading edge
- 11.: Hydrofoil trailing edge
- 12.: Hydrofoil pressure side
- 13.: Hydrofoil suction side
- 14.: Section endplates and stiffeners
- 15.: Flow channel
- 16.: Fishing trawl net
- 17.: Round-shaped elongated element
- 18.: Flow streamline visualization
- 19.: Fixed add-on flap
- 20.: Shutter
- 21.: Drive means
- 22.: Pivoting axis
- 23.: Fixation device
- C.: Chord length of trawl door
- D1.: Minor axis of round-shaped elongated element
- D2.: Major axis of round-shaped elongated element

## Claims

1. A trawl door (2) comprising
a plurality of hydrofoils (9), and
at least one round-shaped elongated element (17);
wherein the plurality of hydrofoils (9) extends in parallel in a longitudinal direction of the hydrofoils (9) and being arranged in an overlapping sequence so that one or more flow channels (15) are formed between neighbouring hydrofoils (9), and the at least one round-shaped elongated element (17) extends in a longitudinal direction parallel to the longitudinal direction of the hydrofoils (9);
wherein the trawl door has a chord length (C) defined as the chord length measured from a leading edge (10) of a first hydrofoil (9) of the overlapping sequence of the plurality of hydrofoils (9) to a trailing edge (11) of a last hydrofoil (9) of the overlapping sequence of the plurality of hydrofoils (9);
wherein the at least one round-shaped elongated element (17) is positioned at a pressure side (12) of the plurality of hydrofoils (9) and at a rear part of the overlapping sequence of the plurality of hydrofoils (9) in such a way that the at least one round-shaped elongated element (17) forms a structurally connected integrated part to the plurality of hydrofoils (9) such that at least one flow channel (15) is formed between the at least one round-shaped elongated element (17) and the last hydrofoil (9) of the overlapping sequence of the plurality of hydrofoils (9);
wherein the at least one round-shaped elongated element (17) has an elliptically shaped cross-section having a minor axis (D1) and a major axis (D2); and
wherein the major axis (D2) is between 5% and 75% of the chord length (C), and wherein the ratio between the minor axis (D1) and the major axis (D2) is between 0.5 and 1.0.

2. The trawl door (2) according to any preceding claim, wherein the at least one round-shaped elongated element (17) comprises an interior cavity, wherein the interior cavity extends through the at least one round-shaped elongated element (17) in the longitudinal direction of at least one round-shaped elongated element (17), and wherein the interior cavity is in fluid connection with water surrounding the at least one round-shaped elongated element (17) during operation of the trawl door (2).

3. The trawl door (2) according to any of the preceding claims, wherein the at least one round-shaped elongated element (17) comprises an interior cavity and wherein one or more holes extends perpendicular to the longitudinal direction of the at least one round-shaped elongated element (17) and extends from the interior cavity through the at least one round-shaped elongated element (17).

4. The trawl door (2) according to any of the preceding claims, wherein the trawl door (2) further comprises one or more shutters (20) extending in the longitudinal direction of the plurality of hydrofoils (9) and arranged at the pressure side of the plurality of hydrofoils (12), drive means (21) for rotating the one or more shutters (20) about a pivoting axis (22) extending in the longitudinal direction of the plurality of hydrofoils (9), and wherein the drive means (21) are arranged to rotate at least one of the shutters (20) between a disengaged position and an engaged position, in which engaged position the at least one shutter (20) substantially reduces or prevents a fluid flow through one or more of said flow channels during operation of the trawl door, and wherein the at least one shutter (20) substantially reduces or prevents a fluid flow through one or more of the flow channels (15) during operation of the trawl door by at least 50%.

5. The trawl door (2) according to any of the preceding claims, wherein the width of the at least one flow channel (15) formed between the at least one round-shaped elongated element (17) and the last hydrofoil (9) of the overlapping sequence of the plurality of hydrofoils (9) is between 50% and 200% of the width of the one or more flow channels (15) formed between neighbouring hydrofoils (9).

6. The trawl door (2) according to any of the preceding claims, wherein one or more of the plurality of hydrofoils and/or the at least one round-shaped elongated element are made from metal or a lightweight material such as plastic or rubber, wood, or fibreboard material.

7. Use of a set of trawl doors (2) comprising one starboard trawl door (2) and one port trawl door (2), for trawling operations, wherein each of the trawl doors (2) is a trawl door according to claim 1.

8. Use of a set of trawl doors (2) comprising one starboard trawl door (2) and one port trawl door (2), for towing a fishing trawl net (16), wherein a fishing vessel (1) is towing the set of trawl doors (2), and wherein each of the trawl doors (2) is a trawl door according to claim 1.

9. Use of a set of trawl doors (2) comprising one starboard trawl door (2) and one port trawl door (2), for towing seismic equipment for seabed measurements for measuring the seabed composition, and wherein each of the trawl doors (2) is a trawl door according to claim 1;
wherein the at least one round-shaped elongated element (17) has an elliptically shaped cross-section having a minor axis (D1) and a major axis (D2); and
wherein the major axis (D2) is between 5% and 75% of the chord length (C), and wherein the ratio between the minor axis (D1) and the major axis (D2) is between 0.5 and 1.0.

## Patentansprüche

1. Schlepptür (2), umfassend
eine Vielzahl von Tragflügeln (9) und
mindestens ein rund geformtes, längliches Element (17);
wobei sich die Vielzahl von Tragflügeln (9) parallel in einer Längsrichtung der Tragflügel (9) erstreckt und in einer überlappenden Reihenfolge angeordnet ist, so dass ein oder mehrere Strömungskanäle (15) zwischen benachbarten Tragflügeln (9) gebildet werden, und sich das mindestens eine rund geformte, längliche Element (17) in einer Längsrichtung parallel zu der Längsrichtung der Tragflügel (9) erstreckt;
wobei die Schlepptür eine Sehnenlänge (C) aufweist, die als die Sehnenlänge definiert ist, die von einer Vorderkante (10) eines ersten Tragflügels (9) der überlappenden Reihenfolge der mehreren Tragflügel (9) zu einer Hinterkante (11) eines letzten Tragflügels (9) der überlappenden Reihenfolge der Vielzahl von Tragflügeln (9) gemessen wird;
wobei das mindestens eine rund geformte, längliche Element (17) an einer Druckseite (12) der Vielzahl von Tragflügeln (9) und an einem hinteren Teil der überlappenden Reihenfolge der Vielzahl von Tragflügeln (9) so positioniert ist, dass das mindestens eine rund geformte, längliche Element (17) einen strukturell verbunden integrierten Teil mit der Vielzahl von Tragflügeln (9) derart bildet, dass mindestens ein Strömungskanal (15) zwischen dem mindestens einen rund geformten, länglichen Element (17) und dem letzten Tragflügel (9) der überlappenden Reihenfolge der Vielzahl von Tragflügeln (9) gebildet wird;
wobei das mindestens eine rund geformte, längliche Element (17) einen elliptisch geformten Querschnitt mit einer Nebenachse (D1) und einer Hauptachse (D2) aufweist; und
wobei die Hauptachse (D2) zwischen 5 % und 75 % der Sehnenlänge (C) ist, und wobei das Verhältnis zwischen der Nebenachse (D1) und der Hauptachse (D2) zwischen 0,5 und 1,0 ist.

2. Schlepptür (2) nach einem der vorhergehenden Ansprüche, wobei das mindestens eine rund geformte, längliche Element (17) einen Innenhohlraum umfasst, wobei sich der Innenhohlraum durch das mindestens eine rund geformte, längliche Element (17) in der Längsrichtung des mindestens einen rund geformten, länglichen Elements (17) erstreckt, und wobei der Innenhohlraum während des Betriebs der Schlepptür (2) in Fluidverbindung mit Wasser steht, das das mindestens eine rund geformte, längliche Element (17) umgibt.

3. Schlepptür (2) nach einem der vorhergehenden Ansprüche, wobei das mindestens eine rund geformte, längliche Element (17) einen Innenhohlraum umfasst und wobei sich ein oder mehrere Löcher senkrecht zu der Längsrichtung des mindestens einen rund geformten, länglichen Elements (17) erstrecken und sich von dem Innenhohlraum durch das mindestens eine rund geformte, längliche Element (17) erstrecken.

4. Schlepptür (2) nach einem der vorhergehenden Ansprüche, wobei die Schlepptür (2) ferner eine oder mehrere Klappen (20) umfasst, die sich in die Längsrichtung der Vielzahl von Tragflügeln (9) erstrecken und auf der Druckseite der Vielzahl von Tragflügeln (12) angeordnet sind, Antriebsmittel (21) zum Drehen der einen oder mehrerer Klappen (20) um eine Schwenkachse (22), die sich in die Längsrichtung der Vielzahl von Tragflügeln (9) erstreckt, und wobei die Antriebsmittel (21) so angeordnet sind, dass sie mindestens eine der Klappen (20) zwischen einer ausgerückten Position und einer eingerückten Position drehen, wobei in der eingerückten Position die mindestens eine Klappe (20) während des Betriebs der Schlepptür einen Fluidstrom durch einen oder mehrere der Strömungskanäle im Wesentlichen reduziert oder verhindert, und wobei die mindestens eine Klappe (20) während des Betriebs der Schlepptür einen Fluidstrom durch einen oder mehrere der Strömungskanäle (15) um mindestens 50 % im Wesentlichen reduziert oder verhindert.

5. Schlepptür (2) nach einem der vorhergehenden Ansprüche, wobei die Breite des mindestens einen Strömungskanals (15), der zwischen dem mindestens einen rund geformten, länglichen Element (17) und dem letzten Tragflügel (9) der überlappenden Reihenfolge der Vielzahl von Tragflügeln (9) gebildet wird, zwischen 50 % und 200 % der Breite des einen oder der mehreren Strömungskanäle (15) ist, die zwischen benachbarten Tragflügeln (9) gebildet werden.

6. Schlepptür (2) nach einem der vorhergehenden Ansprüche, wobei einer oder mehrere der Vielzahl von Tragflügeln und/oder das mindestens eine rund geformte, längliche Element aus Metall oder einem leichten Material wie beispielsweise Kunststoff oder Gummi, Holz oder Faserplattenmaterial hergestellt sind.

7. Verwendung eines Satzes von Schlepptüren (2), umfassend eine Steuerbord-Schlepptür (2) und eine Backbord-Schlepptür (2), zum Schleppnetzbetrieb, wobei jede der Schlepptüren (2) eine Schlepptür nach Anspruch 1 ist.

8. Verwendung eines Satzes von Schlepptüren (2), umfassend eine Steuerbord-Schlepptür (2) und eine Backbord-Schlepptür (2) zum Schleppen eines Schleppnetzes (16), wobei ein Fischereifahrzeug (1) den Satz von Schlepptüren (2) schleppt und wobei jede der Schlepptüren (2) eine Schlepptür nach Anspruch 1 ist.

9. Verwendung eines Satzes von Schlepptüren (2), umfassend eine Steuerbord-Schlepptür (2) und eine Backbord-Schlepptür (2) zum Schleppen von seismischen Geräten für Meeresbodenmessungen zum Messen der Meeresbodenzusammensetzung, wobei jede der Schlepptüren (2) eine Schlepptür nach Anspruch 1 ist;
wobei das mindestens eine rund geformte, längliche Element (17) einen elliptisch geformten Querschnitt mit einer Nebenachse (D1) und einer Hauptachse (D2) aufweist; und
wobei die Hauptachse (D2) zwischen 5 % und 75 % der Sehnenlänge (C) ist, und wobei das Verhältnis zwischen der Nebenachse (D1) und der Hauptachse (D2) zwischen 0,5 und 1,0 ist.

## Revendications

1. Panneau de chalut (2) comprenant
une pluralité d'ailes portantes (9), et
au moins un élément allongé de forme ronde (17) ;
dans lequel la pluralité d'ailes portantes (9) s'étendent parallèlement dans une direction longitudinale des ailes portantes (9) et sont disposée dans une séquence de chevauchement de sorte qu'un ou plusieurs canaux d'écoulement (15) soient formés entre des ailes portantes (9) voisines, et l'au moins un élément allongé de forme ronde (17) s'étend dans une direction longitudinale parallèle à la direction longitudinale des ailes portantes (9) ;
dans lequel le panneau de chalut présente une longueur de corde (C) définie comme la longueur de corde mesurée à partir d'un bord d'attaque (10) d'une première aile portante (9) de la séquence de chevauchement de la pluralité d'ailes portantes (9) vers un bord de fuite (11) d'une dernière aile portante (9) de la séquence de chevauchement de la pluralité d'ailes portantes (9) ;
dans lequel l'au moins un élément allongé de forme ronde (17) est positionné au niveau d'un intrados (12) de la pluralité d'ailes portantes (9) et au niveau d'une partie arrière de la séquence de chevauchement de la pluralité d'ailes portantes (9) de telle manière que l'au moins un élément allongé de forme ronde (17) forme une partie intégrée structurellement reliée à la pluralité d'ailes portantes (9) de sorte qu'au moins un canal d'écoulement (15) soit formé entre l'au moins un élément allongé de forme ronde (17) et la dernière aile portante (9) de la séquence de chevauchement de la pluralité d'ailes portantes (9) ;
dans lequel l'au moins un élément allongé de forme ronde (17) présente une section transversale de forme elliptique présentant un petit axe (D1) et un grand axe (D2) ; et
dans lequel le grand axe (D2) est compris entre 5 % et 75 % de la longueur de corde (C), et dans lequel le rapport entre le petit axe (D1) et le grand axe (D2) est compris entre 0,5 et 1,0.

2. Panneau de chalut (2) selon l'une quelconque revendication précédente, dans lequel l'au moins un élément allongé de forme ronde (17) comprend une cavité interne, dans lequel la cavité interne s'étend à travers l'au moins un élément allongé de forme ronde (17) dans la direction longitudinale d'au moins un élément allongé de forme ronde (17), et dans lequel la cavité interne est en communication fluidique avec de l'eau entourant l'au moins un élément allongé de forme ronde (17) pendant le fonctionnement du panneau de chalut (2).

3. Panneau de chalut (2) selon l'une quelconque des revendications précédentes, dans lequel l'au moins un élément allongé de forme ronde (17) comprend une cavité interne et dans lequel un ou plusieurs trous s'étendent perpendiculairement à la direction longitudinale de l'au moins un élément allongé de forme ronde (17) et s'étendent à partir de la cavité interne à travers l'au moins un élément allongé de forme ronde (17).

4. Panneau de chalut (2) selon l'une quelconque des revendications précédentes, dans lequel le panneau de chalut (2) comprend en outre une ou plusieurs tapes (20) s'étendant dans la direction longitudinale de la pluralité d'ailes portantes (9) et disposées au niveau de l'intrados de la pluralité d'ailes portantes (12), des moyens d'entraînement (21) destinés à faire tourner la ou les tapes (20) autour d'un axe de pivotement (22) s'étendant dans la direction longitudinale de la pluralité d'ailes portantes (9), et dans lequel les moyens d'entraînement (21) sont conçus pour faire tourner au moins l'une des tapes (20) entre une position libérée et une position en prise, dans la position en prise, la au moins une tape (20) réduit sensiblement ou empêche un écoulement de fluide à travers l'un ou plusieurs desdits canaux d'écoulement pendant le fonctionnement du panneau de chalut, et dans lequel la au moins une tape (20) réduit sensiblement ou empêche un écoulement de fluide à travers l'un ou plusieurs des canaux d'écoulement (15) pendant le fonctionnement du panneau de chalut d'au moins 50 %.

5. Panneau de chalut (2) selon l'une quelconque des revendications précédentes, dans lequel la largeur de l'au moins un canal d'écoulement (15) formé entre l'au moins un élément allongé de forme ronde (17) et la dernière aile portante (9) de la séquence de chevauchement de la pluralité d'ailes portantes (9) est comprise entre 50 % et 200 % de la largeur du ou des canaux d'écoulement (15) formés entre des ailes portantes (9) voisines.

6. Panneau de chalut (2) selon l'une quelconque des revendications précédentes, dans lequel l'une ou plusieurs de la pluralité d'ailes portantes et/ou l'au moins un élément allongé de forme ronde sont fabriqués à partir d'un métal ou d'un matériau léger tel que du plastique ou du caoutchouc, du bois ou un matériau en fibres.

7. Utilisation d'un ensemble de panneaux de chalut (2) comprenant un panneau de chalut de tribord (2) et un panneau de chalut de bâbord (2), pour des opérations de chalutage, dans laquelle chacun des panneaux de chalut (2) est un panneau de chalut selon la revendication 1.

8. Utilisation d'un ensemble de panneaux de chalut (2) comprenant un panneau de chalut de tribord (2) et un panneau de chalut de bâbord (2), pour remorquer un chalut de pêche (16), dans laquelle un navire de pêche (1) remorque l'ensemble de panneaux de chalut (2), et dans laquelle chacun des panneaux de chalut (2) est un panneau de chalut selon la revendication 1.

9. Utilisation d'un ensemble de panneaux de chalut (2) comprenant un panneau de chalut de tribord (2) et un panneau de chalut de bâbord (2), pour remorquer un équipement sismique pour des mesures de fond marin permettant de mesurer la composition de fond marin, et dans laquelle chacun des panneaux de chalut (2) est un panneau de chalut selon la revendication 1 ;
dans laquelle l'au moins un élément allongé de forme ronde (17) présente une section transversale de forme elliptique présentant un petit axe (D1) et un grand axe (D2) ; et
dans laquelle le grand axe (D2) est compris entre 5 % et 75 % de la longueur de corde (C), et dans lequel le rapport entre le petit axe (D1) et le grand axe (D2) est compris entre 0,5 et 1,0.
